# EUROPÄISCHE PATENTSCHRIFT

(11) **EP 1 966 294 B1**
(45) Veröffentlichungstag und Bekanntmachung des Hinweises auf die Patenterteilung: **09.03.2011**
(21) Anmeldenummer: 06829485.9
(22) Anmeldetag: 11.12.2006
(51) Int. Cl.: C08K 5/00

(54) **POLYAMIDFORMMASSEN**
POLYAMIDE MOLDING MATERIALS
MATIERES POUR MOULAGE A BASE DE POLYAMIDE

(30) Priorität: 22.12.2005 DE 102005062165
(43) Veröffentlichungstag der Anmeldung: 10.09.2008
(73) Patentinhaber: LANXESS Deutschland GmbH, 51369 Leverkusen (DE)
(72) Erfinder: HUBERTUS VAN MULLEKOM, Robert, 9160 Lokeren (DE); SCHÄFER, Marcus, 47803 Krefeld (DE); JOACHIMI, Detlev, 47800 Krefeld (DE)
(86) Internationale Anmeldenummer: PCT/EP2006/011893
(87) Internationale Veröffentlichungsnummer: WO 2007/079873

(56) Entgegenhaltungen:
- EP-A- 0 516 150
- EP-A2- 0 469 542
- WO-A-01/94464
- WO-A-99/46323
- WO-A-03/011959
- WO-A2-03/060001
- US-B1- 6 376 584
- US-B1- 6 423 768

## Beschreibung

Die Erfindung betrifft die Verwendung von Mono-Estern der Bernsteinsäure als molekulargewichtsabbauendes Additiv zur Verbesserung der Fließfähigkeit bei der Herstellung von Polyamidformmassen.

Polyamide zeichnen sich durch eine Vielzahl vorteilhafter Eigenschaften wie z.B. hohe Zähigkeit, hohe Temperaturfestigkeit u.a. aus, die ihnen im Bereich der technischen Thermoplaste einen festen Platz im Markt sichern. Diese Basiseigenschaften des Polymerharzes werden im Allgemeinen durch die Zugabe von Zusatzstoffen modifiziert. Polymerharz und Zusatzstoff zusammen ergeben die sogenannte Formmasse. Zur mechanischen Eigenschaftsverbesserung von Polyamid werden oft Füllstoffe wie beispielsweise Glasfasern, Wollastonit, Kaolin oder Talkum zu dem Basispolymerharz gegeben, beispielsweise über ein Schmelze-Extrusionsverfahren. Polyamidformmassen kommen in vielen Anwendungen zum Einsatz. Beispielhaft genannt seien Spritzgussteile z. B. für den Automobilmarkt.

Die in den Formmassen eingesetzten Füllstoffe können aber zu einer erheblichen Erhöhung der Schmelzeviskosität der Formmassen führen und begrenzen so die Fließfähigkeit dieser Formmassen. Eine hohe Fließfähigkeit ist jedoch für die gleichmäßige und vollständige Füllung einer Form, sowie für kurze Zykluszeiten und niedrige Fülldrucke bei der Spritzgießverarbeitung vorteilhaft. Eine Möglichkeit um die hohe Fließfähigkeit der Polyamidformmassen bei der Spritzgießverarbeitung zu gewährleisten, ist der Einsatz von Polyamidharzen mit einer möglichst geringen Schmelzeviskosität.

Generell zeigen Polyamidharze bei abnehmendem Molekulargewicht eine abnehmende Schmelzeviskosität. Es liegt daher nahe, für die Anwendungen, wo eine hohe Fließfähigkeit der Formmasse vorteilhaft oder notwendig ist, ein Polyamidbasisharz einzusetzen, das ein verringertes Molekulargewicht hat.

Aus Sicht der industriellen Herstellung von Polyamiden ist dies aber nachteilig, da es den Einsatz eines zusätzlichen Basisharzes bedeutet, was mit einem erhöhten logistischen und wirtschaftlichen Aufwand verbunden ist. Im industriellen Maßstab wird Polyamid-6-Basisharz vorzugsweise in einem kontinuierlichen Prozess produziert, indem flüssiges Caprolactam mit ca. 1 - 4 % Wasser von oben einem oder einer Reihe von vertikalen Rohrreaktoren zugeführt wird. Die Polymerisation wird bei Temperaturen zwischen 240 °C und 270 °C und einer Verweilzeit von 1 bis zu 30 Stunden durchgeführt. Dies bedeutet bei Produktwechsel sehr lange Vor- und Nachlaufzeiten, wodurch das Verfahren ökonomisch und ökologisch benachteiligt ist. Weiterhin ist bei niedermolekularen Polyamiden die Schmelzesteifigkeit verringert, was beispielsweise beim Einsatz einer konventionellen Stranggranulierung die Gesamtproduktionskapazität dadurch senkt, dass durch die Gefahr des Strangabrisses erniedrigte Abzugsgeschwindigkeiten notwendig werden.

Es ist daher vorteilhaft, Polyamidformmassen mit verbesserter Fliessfähigkeit auf Basis von Polyamidharzen mit einem üblichen mittleren Molekulargewicht herzustellen. Als Polyamide mit üblichem mittlerem Molekulargewicht werden dabei aliphatische Polyamide verstanden, die eine relative Lösungsviskosität von 2,9 +/- 0,3 in meta-Kresol (1,0 % Lösung, 25°C) haben.

Polyamidformmassen werden in der Regel über ein Schmelze-Extrusionsverfahren oder Compoundierverfahren hergestellt, wobei in einem Extruder das Polyamidharz aufgeschmolzen und gegebenenfalls mit weiteren Additiven vermischt wird. Füll- und/oder Verstärkungsstoffe wie Glasfasern werden in der Regel über einen separaten Dosiertrichter in die Polymerschmelze zudosiert. Die so entstandene Polyamidformmasse wird als Strang extrudiert, abgekühlt und granuliert. Das Granulat wird anschließend über weitere Verarbeitungsschritte, beispielsweise Spritzgussverfahren, zu Formteilen oder Halbzeugen weiterverarbeitet.

Es ist möglich, über den Zusatz von Additiven während eines Extrusionsprozesses die molekularen Eigenschaften des Polymerharzes zu beeinflussen. So ist in der Patentanmeldung EP 0672703 A1 ein Verfahren zur Herstellung sternförmig verzweigter Polyamidharze beschrieben, wobei tri- oder höherfunktionelle Amine als Additive zu einer Polyamidschmelze während eines Extrusionsprozesses zugegeben werden.

Aus dem Stand der Technik ist bekannt, dass durch Zusatz von Säuren als Additive während eines Extrusionsprozesses sich Fließfähigkeiten von Formmassen erreichen lassen, die normalerweise nur mit Polyamidharzen mit verringertem Molekulargewicht erhalten werden.

In der Patentschrift US 6,835,771 B2 werden zum Beispiel Dicarbonsäuren wie Sebacinsäure während des Compoundierschrittes zugefügt, um die Viskosität zu reduzieren.

WO 03/060001 A2 beschreibt den Einsatz von ortho-Hydroxytriazinen, (sterisch) gehinderten Hydroxybenzoaten und gegebenenfalls (sterisch) gehinderten Aminen als UV-Stabilisatoren u.a. in Polymaiden.

US 6,376,584 B1 beschreibt den Einsatz (sterisch) gehinderter Amine die am N-Atom durch N-Alkoxy-Gruppen substituiert sind und 1 bis 3 Hydroxygruppen aufweisen als Antistatika in Polycarbonaten und Polycarbonat/ABS Blends. Ferner lehrt diese Schrift den Einsatz dieser Verbindungen in Polymaid/EPDM Blends.

WO 03/01159 A offenbart abbaubare Zusammensetzungen aus biologisch abbaubaren aliphatischaromatischen Copolyestern und einem Weichmacher, bevorzugt Ester der Citronensäure, der Benzoesäure oder deren Mischungen u.a. zur Verwendung in Polyether-Polyamid-BlockCopolymeren.

US 6,423,768 B1 beschreibt die Verbesserung von Polymer-Organoclay-Zusammensetzungen u.a. auf Basis von Polyamid. Zum Einsatz kommen dabei Dicarbonsäuren, Tricarbonsäuren und cyclische Carbonsäureanhydride, u.a. 2-Hydroxysuccinicanhydrid.

WO 01/94464 A lehrt die Verbesserung der Viskositätseigenschaften von Plastisolen zwecks Einsatz als Klebstoffe in der Kraftfahrzeugfabrikation. Als Weichmacher werden dabei u.a. monomere Ester der Bernsteinsäure aufgeführt.

WO 99/46323 offenbart die Vermeidung der Entfärbung von Nylon bei Lichteinfluss oder Wärmeeinfluss durch den Einsatz u.a. aliphatischer Dicarbonsäuren.

EP 0 469 542 A2 beschreibt Polyamidzusammensetzungen, die einen Fließfähigkeitsmodifizierer aufweisen. Als Beispiele werden Methyl- oder Brom-substituierte Bernsteinsäure sowie Bernsteinsäureanhydrid aufgelistet.

EP 0 516 150 A1 offenbart Zusammensetzungen auf Basis von A) Poly(phenylen)ethern, B) Polyamid und C) Alkenylbernsteinsäureanhydrid.

Der Molekulargewichtsabbau darf aber nur bei der Herstellung der Polyamidformmasse stattfinden und muss vor den nachfolgenden Verarbeitungsschritten der Formmasse möglichst weitestgehend abgeschlossen sein. Insbesondere bei der nachfolgenden Verarbeitung im Spritzguss bei Massetemperaturen die im Bereich der Temperaturen bei der Herstellung der Formmasse liegen ist ein weiterer Abbau des Harzes unerwünscht. Der weitere Molekulargewichtsabbau der Formmasse bei den der Compoundierung folgenden Verarbeitungsschritten ist unerwünscht, da dies zu einem nicht-reproduzierbaren Verhalten bei der Verarbeitung der Formmasse führt und zudem die mechanischen Eigenschaften der Formmasse beeinträchtigen kann.

Aufgabe der vorliegenden Erfindung war es daher, leichtfließende Polyamidformmassen zur Verfügung zu stellen die:
- aus Polyamidharzen mit einem herkömmlichen Molekulargewicht, d. h. Polyamidharze mit einer relativen Lösungsviskosität in *m*-Kresol von 2,6 bis 3,2 hergestellt werden, und
- mechanische und rheologische Eigenschaften aufweisen, die vergleichbar sind, mit den mechanischen und rheologischen Eigenschaften von leichtfließenden Formmassen, die aus einem Polyamidharz mit einem verringerten Molekulargewicht hergestellt sind, d. h. um weniger als 10 % von diesen abweichen,
- verarbeitungsstabil sind, d. h. deren relative Lösungsviskosität in einem mittels Spritzgussverfahren hergestellten Formteil maximal nur 5 % geringer ist, als die relative Lösungsviskosität des Polyamidharzes im Ausgangsmaterial.

Die Lösung dieser Aufgabe und somit Gegenstand der Erfindung ist der Einsatz von Mono-Estern der Bernsteinsäure als molekulargewichtsabbauendes Additiv zur Verbesserung der Fließfähigkeit bei der Herstellung von Polyamidformmassen.

Überraschenderweise eignen sich die Mono-Ester der Bernsteinsäure besonders gut als molekulargewichtsabbauende Additive bei der Herstellung von Polyamidformmassen mittels Extrusionsverfahren, indem sie zu einer Verringerung der relativen Lösungsviskosität des Polyamidharzes führen und so dessen Fließfähigkeit deutlich verbessern. Zudem bleibt die molekulargewichtsabbauende Wirkung der Mono-Ester der Bernsteinsäure weitgehend auf den Extrusionsschritt beschränkt und es findet beispielsweise im nachfolgenden Spritzgussschritt keine weitere signifikante Reduktion der relativen Lösungsviskosität des Polyamidharzes zur Verwendung anderer Carbonsäureverbindungen statt.

In einer bevorzugten Ausführungsform können zusätzlich zu den Komponenten A) Polyamid und B) Mono-Ester der Bernsteinsäure noch die Komponenten C) und/oder D) hinzu gegeben werden.

Die relative Lösungsviskosität wird entsprechend der ISO 307:2003 bestimmt und ist auf Polyamide mit der Bezeichnung PA 46, PA 6, PA 66, PA 69, PA 610, PA 612, PA 11, PA 12, PA 6T und PA MXD6 anwendbar.

Als Komponente A) enthalten die in ihrer Fließfähigkeit zu verbessernden Zusammensetzungen mindestens ein teilkristallines thermoplastisches Polyamid mit einer relativen Lösungsviskosität in m-Kresol von 2,6 bis 3,2 bevorzugt zu 99,9 bis 10 Gew.-Teilen, besonders bevorzugt zu 99,0 bis 55 Gew.-Teilen.

Die erfindungsgemäß in ihrer Fließfähigkeit zu verbessernden Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungspartnern (z. B. Elastomeren) oder auch Verstärkungsmaterialien (wie z. B. mineralischen Füllstoffen oder Glasfasern) zu Werkstoffen mit speziell eingestellten Eigenschaftskombinationen ausgerüstet werden. Geeignet sind auch Blends mit Anteilen von anderen Polymeren, z. B. von Polyethylen, Polypropylen, ABS (AcrylnitrilButadien-Styrol-Copolymer), wobei ggf. ein oder mehrere Kompatibilisatoren eingesetzt werden können. Die Eigenschaften der Polyamide lassen sich durch Zusatz von Elastomeren verbessern, z. B. im Hinblick auch die Schlagzähigkeit von beispielsweise verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für spätere beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Erfindungsgemäß bevorzugt als Komponente A) einzusetzende Polyamide sind teilkristalline Polyamide, die ausgehend von Diaminen und Dicarbonsäure und/oder Lactamen mit wenigstens 5 Ringglieder oder entsprechenden Aminosäuren hergestellt werden können.

Als Edukte kommen aliphatische und/oder aromatische Dicarbonsäuren wie Adipinsäure, 2,2,4-und 2,4,4-Trimethyladipinsäure, Azelainsäure, Sebazinsäure, Isophthalsäure, Terephthalsäure, aliphatische und/oder aromatische Diamine wie z. B. Tetramethylendiamin, Hexamethylendiamin, 1,9-Nonandiamin, 2,2,4- und 2,4,4-Trimethylhexamethylendiamin, die isomeren Diaminodicyclohexlmethane, Diaminodicyclohexylpropane, Bis-aminomethyl-Cyclohexan, Phenylendiamine, Xylylendiamine, Aminocarbonsäuren wie z. B. Aminocapronsäure, bzw. die entsprechenden Lactame in Betracht. Copolyamide aus mehreren der genannten Monomeren sind eingeschlossen.

Erfindungsgemäß besonders bevorzugt werden Caprolactame, ganz besonders bevorzugt ε-Caprolactam sowie die meisten auf PA6, PA66 und auf anderen aliphatischen und/oder aromatischen Polyamiden bzw. Copolyamiden basierenden Compounds, bei denen auf eine Polyamidgruppe in der Polymerkette 3 bis 11 Methylengruppen kommen, eingesetzt.

Die erfindungsgemäß als Komponente A) in ihrer Fließfähigkeit zu verbessernden teilkristallinen Polyamide können auch im Gemisch mit anderen Polyamiden und/oder weiteren Polymeren eingesetzt werden.

Den Polyamiden können übliche Additive wie z. B. Entformungsmittel, Stabilisatoren und/oder Fließhilfsmittel in der Schmelze zugemischt oder auf der Oberfläche aufgebracht werden.

In bevorzugter Weise werden die Mono-Ester der Bernsteinsäure zu 0,1 bis 2 Gew.-%, besonders bevorzugt zu 0,15 bis 1,5 Gew.-% bezogen auf die Gesamtmenge Polyamidharz eingesetzt.

Erfindungsgemäß insbesondere besonders bevorzugt sind die Mono-Ester der Bernsteinsäure mit aliphatischen ein- oder mehrwertigen Alkoholen, beispielsweise Bernsteinsäuremonomethylester, Bernsteinsäuremonoethylester, Bernsteinsäuremonopropylester, sowie Ethylenglykoldisuccinat, Propylenglykoldisuccinat, Butylenglykoldisuccinat, Glyceroltrisuccinat, Pentaerythritoltetrasuccinat, Dipentaerythritolhexasuccinat und Tripentaerythritoloctasuccinat.

Insbesondere ganz besonders bevorzugt werden eingesetzt:
Bernsteinsäuremonomethylester,
Pentaerythritoltetrasuccinat der Formel (II) aus DE-A 2 411 480:

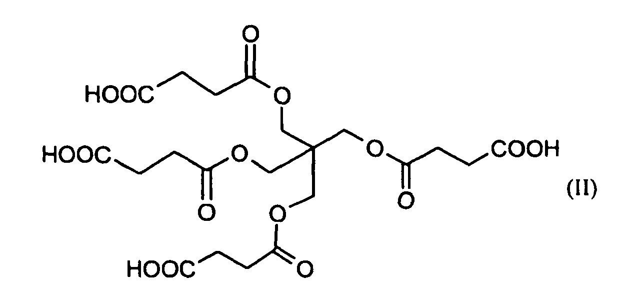

Dipentaerythritolhexasuccinat der Formel (III) aus WO 2005 090441 A1

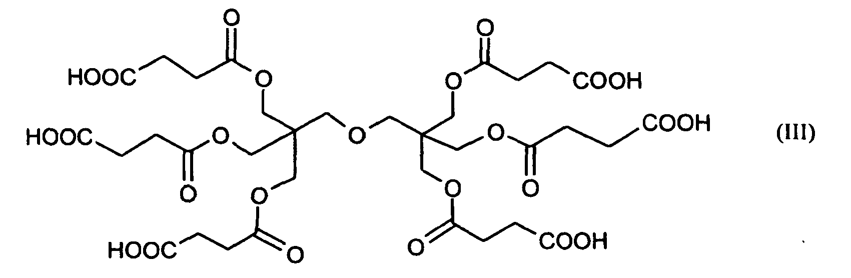

Wie bereits oben erwähnt, können die erfindungsgemäß in ihrer Fließfähigkeit zu verbessernden Polyamidformmassen weiterhin enthalten:
A) Füllstoffe und/oder Verstärkungsstoffe wie z. B. Minerale, synthetische Fasern, Glasfasern, Whisker oder Kohlenstofffasem. Als verstärkendes Additiv werden Additive verstanden, die das Zug-Modul der Formmasse erhöhen. Als faserförmige Verstärkungsstoffe neben Glasfasern kommen Aramidfasern, Mineralfasern und Whisker in Betracht. Als geeignete mineralische Füllstoffe seien beispielhaft Kalziumcarbonat, Dolomit, Kalziumsulfat, Glimmer, Fluorglimmer, Wollastonit, Talkum und Kaolin genannt. Zur Verbesserung der mechanischen Eigenschaften können die faserförmige Verstärkungsstoffe und die mineralischen Füllstoffe oberflächenbehandelt sein.
D) weitere Additive und Hilfsstoffe wie beispielsweise Flammschutzmittel, Elastomermodifikatoren, Farbmittel, Gleit- und Entformungsmittel oder Nukleirungsmittel. Als Gleit und Entformungsmittel können beispielsweise Esterwachse, Pentaerytritoltetrastearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C Atomen) eingesetzt werden. Erfindungsgemäß werden bevorzugt Gleit- und/oder Entformungsmittel aus der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen eingesetzt, wobei Ethylen-bis-stearylamid oder Pentaerythrittetrastearat (PETS) ganz besonders bevorzugt sind.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Als Farbmittel eignen sich sowohl organische als auch anorganische Pigmente und / oder Farbstoffe. Ruß ist gegebenenfalls in sehr geringen Mengen Bestandteil der Pigmentmischung. Die Pigmente/ Farbstoffe und / oder Ruße können gegebenenfalls auch als Batch eingesetzt werden.

Beispiele für anorganische Pigmente sind Antimontrioxid, Antimonpentoxid, basisches Bleicarbonat, basisches Bleisulfat oder Bleisilikat, Lithopone, Titandioxid (Anatas, Rutil), Zinkoxid, Zinksulfid, Metalloxide wie Berlinerblau, Bleichromat, Bleisulfochromate, Chromantimontitanat, Chromoxide, Eisenoxide, Kobaltblau, Kobaltchromblau, Kobaltnickelgrau, Manganblau, Manganviolett, Molybdatorange, Molybdatrot, Nickelantimontitanat, Ultramarinblau, sowie Metallsulfide wie Antimontrisulfid, Cadmiumsulfid, Cadmiumsulfoselenide, Zirkonsilikate, Zirkonvanadiumblau, Zirkonpraseodymgelb.

Beispiele für organische Pigmente sind Antrachinon-, Azo-, Azomethin-, Benzanthron-, Chinacridon-, Chinophthalon-, Dioxazin-, Flavanthron-, Indanthron-, Isoindolin-, Isoindolinon-, Methin-, Perinon-, Perylen-, Phthalocyanin-, Pyranthron-, Pyrrolopyrrol-, Thioindigopigmente sowie Metallkomplexe von z. B. Azo-, Azomethin-, Methinfarbstoffen oder Metallsalzen von Azoverbindungen.

Als polymerlösliche Farbstoffe eignen sich beispielsweise Dispersionsfarbstoffe, wie solche der Anthrachinonreihe, beispielsweise Alkylamino-, Amino-, Arylamino-, Cyclohexylamino-, Hydroxy-, Hydroxyamino- oder Phenylmercaptoanthrachinone, sowie Metallkomplexe von Azofarbstoffen, insbesondere 1:2-Chrom- oder Kobaltkomplexe von Monoazofarbstoffen, sowie Fluoreszenzfarbstoffe, zum Beispiel solche aus der Benzthiazol-, Cumarin-, Oxarin-, - oder Thiazinreihe.

Die polymerlöslichen Farbstoffe können auch in Kombinationen mit Füllern und/ oder Pigmenten, insbesondere mit anorganischen Pigmenten wie Titandioxid eingesetzt werden.

Es können Pigmente und/oder polymerlösliche Farbstoffe verwendet werden. Die verwendeten Farbstoffe oder Pigmente dürfen im Falle der Einfärbung von Formmassen, die lasertransluzent sein sollen, selbstverständlich im NIR-Spektralbereich keine oder nur eine sehr geringe Absorption aufweisen und sollten mit den erfindungsgemäß verwendeten thermoplastischen Polymeren verträglich sein und deren mechanische oder sonstigen Eigenschaften nicht wesentlich beeinträchtigen.

Geeignete Pigmentzusätze sind beispielsweise Fettsäuren mit mindestens 12 C-Atomen, wie Behensäure oder Stearinsäure, deren Amide, Salze oder Ester, wie Aluminiumstearat, Magnesiumstearat, Zinkstearat, oder Magnesiumbehenat, sowie quartäre Ammoniumverbindungen, wie Tri-(C1-C4)-alkylbenzylammoniumsalze, Wachse, wie Polyethylenwachs, Harzsäuren, wie Abietinsäure, Kolophoniumseife, hydriertes oder dimeriesiertes Kolophonium, C12-C18-Paraffindisulfonsäuren oder Alkylphenole.

Bevorzugt sind Farbstoffe vom Pyrazolon-, Perinon- und Anthrachinontyp, weiterhin vom Methin-, Azo- und Cumarin-Typ.

Ebenfalls bevorzugt sind die metallhaltigen Pigmente, wie die anorganischen Pigmente und die Metallkomplexe von Azo-, Azomethin- oder Methin-Farbstoffen, Azomethin-, Chinacridon-, Dioxazin-, Isoindolin-, Isoindolinon-, Perylen-, Phthalocyanin-, Pyrrolopyrrol- und Thioindigo-Farbmitteln und Wismut-Vanadat.

Als Nukleierungsmittel können z.B. Calciumphenylphosphinat, Lithiumchlorid, Natriumphenylphosphinat, Aluminiumoxid, Siliziumdioxid, Bariumsulfat, Montmorillonit sowie bevorzugt Talkum eingesetzt werden.

Im Falle von Schlagzähmodifikatoren (Elastomermodifikatoren, Modifikatoren) handelt es sich ganz allgemein um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl bzw. Methacrylsäureester mit 1 bis 18 C Atomen in der Alkoholkomponente.

Bekannte Flammschutzmittel in Polyamiden sind beispielsweise Halogenverbindungen, roter Phosphor, organische Phosphor- und Stickstoffverbindungen oder mineralische Flammschutzmittel wie z.B. Magnesiumhydroxid.

In einer bevorzugten Ausführungsform können die erfindungsgemäßen Polyamidformmassen zusätzlich zu den Komponenten A) und B) also noch
C) 5 bis 70 Gew.-% bezogen auf die Gesamtmenge an Polyamidformmasse Füllstoffe und/oder Verstärkungsstoffe, bevorzugt Minerale, synthetische Fasern, Glasfasern, Whisker oder Kohlenstofffasern, besonders bevorzugt Glasfasern enthalten.
   In einer weiteren bevorzugten Ausführungsform können die erfindungsgemäßen Polyamidformmassen zusätzlich zu den Komponenten A), B) und/oder anstelle für C) noch
D) 0,1 - 70 Gew.-% weitere Additive und Hilfsstoffe, bevorzugt Flammschutzmittel, Elastomermodifikatioren, Farbmittel, Gleit- und Entformungsmittel oder Nukleierungsmittel enthalten.

### Beispiele:

### Erfindungsgemäße Einsatzstoffe:

Bernsteinsäuremonomethylester, Fa. Aldrich, Milwaukee, USA
Pentaerythritoltetrasuccinat gemäß DE-A 2 411 480
Dipentaerythritolhexasuccinat gemäß WO 2005 090441 A1

### Nicht-Erfindungsgemäße Einsatzstoffe:

Sebacinsäure, Fa. Aldrich, Milwaukee, USA
Tris(aminocapronsäure)triazin (TACT) gemäß Nestler, Fürst, J. Prakt. Chem. 1963 4 (22), 173
Cyclohexanontetrapropionsäure (CHTP) gemäß Bruson, Riener, J. Am. Chem. Soc., 1942, 64, 2850

### Compoundierung

In allen Beispielen und Vergleichsbeispielen werden Polyamidformmassen auf folgende Weise hergestellt:

Polyamid-6-Harz und die weiteren Additive werden gemischt und in einem kontinuierlich arbeitenden Doppelwellenextruder (Werner & Pfleiderer ZSK 32) aufgeschmolzen. Über einen zweiten Dosiertrichter werden Glasfasern in die Schmelze dosiert. Die Zylindertemperaturen werden dabei so gewählt; dass Massetemperaturen von 260 bis 300 °C eingehalten werden. Der Schmelzstrang wird in Wasser eingeleitet, granuliert und getrocknet. Von den Formmassen wird die relative Lösungsviskosität des Polyamidharzes in m-Kresol bestimmt. Von den Formmassen werden auf einer Spritzgussmaschine Prüfkörper für die mechanischen Prüfungen hergestellt. Während des Spritzgussvorgangs wird der für die Herstellung der Zugstäbe benötigte Fülldruck ermittelt. Die Messung des Fülldrucks erfolgt beim Spritzen der Normprüfkörper für den Zugversuch über einen Drucksensor angussnah am Spritzgießwerkzeug. Es wird der Druck an der Unstetigkeitsstelle im Werkzeuginnendruck-Verlauf zwischen dem flacheren Druckanstieg während der Formfüllphase und dem steileren Anstieg während der Verdichtungsphase der Schmelze bestimmt. An den erhaltenen Prüfkörpern werden folgende Prüfungen durchgeführt: Zugversuch nach ISO 527, Biegeversuch nach ISO 178, Schlagversuch nach Izod ISO 180 1U. Yellowness Index nach ASTM E313. Zur Ermittlung der Fließfähigkeit wird eine 8 x 20 mm Fließspirale gespritzt und der erreichte Fließweg in cm ermittelt. Außerdem wird von den Prüfkörper die relative Lösungsviskosität (R.V.) des Polyamidharzes in *m*-Kresol bestimmt. (1,0 % Lösung, 25°C, ISO 307:2003)

### Vergleichsbeispiel 1: Herstellung von Polyamidformmassen aus einem Polyamid-6-Harz mit einer relativen Lösungsviskosität von 2,9 in m-Kresol (Polyamidharz mit einer herkömmlichen Viskosität):

Es werden eingesetzt:

| | |
|---|---|
| Polyamid-6 der relativen Lösungsviskosität 2,9 in *m*-Kresol (Durethan^{®} B29, Lanxess Deutschland GmbH): | 69,6 Gew.-% |
| Glasfasern (CS 7928, Lanxess Deutschland GmbH): | 30 Gew.-% |
| Nukleierungsmittel (Mikrotalkum) | 0,2 Gew.-% |
| Entformungsmittel (Montanesterwachs) | 0,2 Gew.-% |

### Vergleichsbeispiel 2: Herstellung von leichtfließenden Polyamidformmassen aus einem Polyamidharz mit einer relativen Lösungsviskosität von 2,6 in m-Kresol (ca. 10% verringerte relative Lösungviskosität im Vergleich mit Vergleichsbeispiel 1)

Es werden eingesetzt:

| | |
|---|---|
| Polyamid-6 der relativen Lösungsviskosität 2,6 in *m*-Kresol (Durethan^{®} B26, Lanxess Deutschland GmbH): | 69,6 Gew.-% |
| Glasfasern (CS 7928, Lanxess Deutschland GmbH): | 30 Gew.-% |
| Nukleierungsmittel (Mikrotalkum) | 0,2 Gew.-% |
| Entformungsmittel (Montanesterwachs) | 0,2 Gew.-% |

### Vergleichsbeispiel 3: Versuch zur Herstellung von leichtfließenden Polyamidformmassen aus einem Polyamidharz herkömmlicher relativen Lösungsviskosität und 0,5 Gew.-% Triaminocapronsäuretriazin (TACT)

Es werden eingesetzt:

| | |
|---|---|
| Polyamid-6 der relativen Lösungsviskosität 2,9 in *m*-Kresol (Durethan^{®} B29, Lanxess Deutschland GmbH): | 69,1 Gew.-% |
| Triaminocapronsäuretriazin (TACT) | 0,5 Gew.-% |
| Glasfasern (CS 7928, Lanxess Deutschland GmbH): | 30 Gew.-% |
| Nukleierungsmittel (Mikrotalkum) | 0,2 Gew.-% |
| Entformungsmittel (Montanesterwachs) | 0,2 Gew.-% |

### Vergleichsbeispiel 4: Versuch zur Herstellung von leichtfließenden Polyamidformmassen aus einem Polyamidharz herkömmlicher relativer Lösungsviskosität und 0,5 Gew.-% Cyclohexanontetrapropionsäure (CHTP)

Es werden eingesetzt:

| | |
|---|---|
| Polyamid-6 der relativen Lösungsviskosität 2,9 in *m*-Kresol (Durethan^{®} B29, Lanxess Deutschland GmbH): | 69,1 Gew.-% |
| Cyclohexanontetrapropionsäure(CHTP) | 0,5 Gew.-% |
| Glasfasern (CS 7928, Lanxess Deutschland GmbH): | 30 Gew.-% |
| Nukleierungsmittel (Mikrotalkum) | 0,2 Gew.% |
| Entformungsmittel (Montanesterwachs) | 0,2 Gew.-% |

### Vergleichsbeispiel 5: Versuch zur Herstellung von leichtfließenden Polyamidformmassen aus einem Polyamidharz herkömmlicher relativer Lösungsviskosität und 0,5 Gew.-% Sebacinsäure (SEBS)

Es werden eingesetzt:

| | |
|---|---|
| Polyamid-6 der relativen Lösungsviskosität 2,9 in *m*-Kresol (Durethan^{®} B29, Lanxess Deutschland GmbH): | 69,1 Gew.-% |
| Sebacinsäure (SEBS) | 0,5 Gew.-% |
| Glasfasern (CS 7928, Lanxess Deutschland GmbH): | 30 Gew.-% |
| Nukleierungsmittel (Mikrotalkum) | 0,2 Gew.-% |
| Entformungsmittel (Montanesterwachs) | 0,2 Gew.-% |

### Beispiel 1: Herstellung von leichtfließenden Polyamidformmassen aus einem Polyamidharz herkömmlicher relativer Lösungsviskosität und 0,5 Gew.-% Pentaerythritoltetrasuccinat (PTS)

Es werden eingesetzt:

| | |
|---|---|
| Polyamid-6 der relativen Lösungsviskosität 2,9 in *m*-Kresol (Durethan^{®} B29, Lanxess Deutschland GmbH): | 69,1 Gew.-% |
| Pentaerythritoltetrasuccinat (PTS) | 0,5 Gew.-% |
| Glasfasern (CS 7928, Lanxess Deutschland GmbH): | 30 Gew.-% |
| Nukleierungsmittel (Mikrotalkum) | 0,2 Gew.-% |
| Entformungsmittel (Montanesterwachs) | 0,2 Gew.-% |

### Beispiel 2: Herstellung von leichtfließenden Polyamidformmassen aus einem Polyamidharz herkömmlicher relativer Lösungsviskosität und 0,5 Gew.-% Dipentaerythritolhexasuccinat (DPHS)

Es werden eingesetzt:

| | |
|---|---|
| Polyamid-6 der relativen Lösungsviskosität 2,9 in *m*-Kresol (Durethan^{®} B29, Lanxess Deutschland GmbH): | 69,1 Gew.-% |
| Dipentaerythritoltetrasuccinat (DPHS) | 0,5 Gew.-% |
| Glasfasern (CS 7928, Lanxess Deutschland GmbH): | 30 Gew.-% |
| Nukleierungsmittel (Mikrotalkum) | 0,2 Gew.-% |
| Entformungsmittel (Montanesterwachs) | 0,2 Gew.-% |

### Beispiel 3: Herstellung von leichtfließenden Polyamidformmassen aus einem Polyamidharz herkömmlicher relativen Lösungsviskosität und 0,35 Gew.-% Bernsteinsäuremonomethylester (BMMS)

| | |
|---|---|
| Polyamid-6 der relativen Lösungsviskosität 2,9 in *m*-Kresol (Durethan^{®} B29, Lanxess Deutschland GmbH): | 69,25 Gew.-% |
| Bernsteinsäuremonomethylester (BMMS) | 0,35 Gew.-% |
| Glasfasern (CS 7928, Lanxess Deutschland GmbH): | 30 Gew.-% |
| Nukleierungsmittel (Mikrotalkum) | 0,2 Gew.-% |
| Entformungsmittel (Montanesterwachs) | 0,2 Gew.-% |

### Ergebnisse:

| | **V.Bsp. 1** | **V.Bsp. 2** | **V.Bsp. 3** | **V.Bsp. 4** | **V.Bsp. 5** | **Bsp.1** | **Bsp.2** | **Bsp.3** |
|---|---|---|---|---|---|---|---|---|
| R.V. des eingesetzten Polyamidharzes | 2,90 | 2,60 | 2,90 | 2,90 | 2,90 | 2,90 | 2,90 | 2,90 |
| R.V. des Polyamidharzes nach Compoundierung | 2,77 | 2,53 | 2,60 | 2,64 | 2,57 | 2,54 | 2,49 | 2,58 |
| R.V. des Polyamidharzes nach Spritzguss | 2,77 | 2,53 | 2,46 | 2,44 | 2,41 | 2,49 | 2,47 | 2,54 |
| Änderung der R.V. bei Compoundierung | -2,7% | -4,5 % | -10,3% | -9,0 % | -11,4% | -12,4% | -14,1 % | -11,0 % |
| Änderung der R.V. beim Spritzguss | 0 % | 0 % | -5,4% | -7,6 % | -6,2 % | -2,0 % | -0,8% | -1,6 % |
| Fülldruck bei Spritzgiessverarbeitung [bar] | 254 | 190 | 182 | 164 | 152 | 192 | 188 | 196 |
| Länge der Fließspirale [cm] | 50 | 60 | 63 | 66 | 71 | 61 | 61 | 61 |
| Schlagzähigkeit [kJ/m²] | 79 | 68 | 59 | 57 | 58 | 66 | 67 | 66 |
| Yellowness Index | 30 | 31 | 34 | 35 | 37 | 28 | 28 | 31 |

| | | | | | | | | |
|---|---|---|---|---|---|---|---|---|
| RV = relative Lösungsviskosität | | | | | | | | |

Aus den Ergebnissen ist ersichtlich, dass sich mit den erfindungsgemäßen Bernsteinsäuremonoestern aus den Beispielen 1 bis 3 aus einem Polyamidharz herkömmlicher Viskosität leichtfließende Formmassen herstellen lassen, die zu Formteilen mit den gleichen mechanischen und rheologischen Eigenschaften führen, wie sie normalerweise nur mit leichtfließenden Formmassen, hergestellt aus einem Polyamidharz mit verringerter Viskosität (Vergleichsbeispiel 2), erreichbar sind. Eine thermische Schädigung tritt ebenfalls nicht auf, wie der Yellowness Index zeigt. Versucht man dieses mit anderen Säureverbindungen (Vergleichsbeispiele 3 bis 5) zu erreichen, dann werden Formmassen erhalten, die deutlich schlechtere Eigenschaften zeigen, insbesondere bei der Zähigkeit und den Gelbwerten.

## Patentansprüche

1. Verwendung von Mono-Estern der Bernsteinsäure als molekulargewichtsabbauendes Additiv zur Verbesserung der Fließfähigkeit bei der Herstellung von Polyamidformmassen.

2. Verwendung gemäß Anspruch 1, **dadurch gekennzeichnet, dass** als Mono-Ester der Bernsteinsäure solche mit ein- oder mehrwertigen Alkoholen eingesetzt werden.

3. Verwendung gemäß der Ansprüche 1 oder 2, **dadurch gekennzeichnet, dass** als Mono-Ester der Bernsteinsäure Bemsteinsäuremonoethylester, Bernsteinsäuremonopropylester, Ethylenglykoldisuccinat, Propylenglykoldisuccinat, Butylenglykoldisuccinat, Glyceroltrisuccinat, Pentaerythritoltetrasuccinat, Dipentaerythritolhexasuccinat und Tripentaerythritoloctasuccinat eingesetzt werden.

4. Verwendung gemäß der Ansprüche 1 bis 3, **dadurch gekennzeichnet, dass** die Polyamidformmassen zusätzlich noch
C) Füllstoffe und/oder Verstärkungsstoffe bevorzugt Minerale, synthetische Fasern, Glasfasern, Whisker oder Kohlenstofffasern enthalten.

5. Verwendung gemäß der Ansprüche 1 bis 4, **dadurch gekennzeichnet, dass** die Polyamidformmassen zusätzlich noch
D) weitere Additive und Hilfsstoffe, bevorzugt Flammschutzmittel, Elastomermodifikatoren, Farbmittel, Gleit- und Entformungsmittel und Nukleierungsmittel enthalten.

6. Verwendung gemäß der Ansprüche 1 bis 5, **dadurch gekennzeichnet, dass** die Mono-Ester der Bernsteinsäure in Mengen von 0,1 bis 2 Gew.-%, bezogen auf Komponente A) Polyamid eingesetzt werden.

7. Verwendung gemäß Anspruch 4, **dadurch gekennzeichnet, dass** die Komponente C) in Mengen von 5 bis 70 Gew.-%, bezogen auf die Gesamtmenge an Polyamidformmasse eingesetzt wird.

8. Verwendung gemäß der Ansprüche 4 und 7, **dadurch gekennzeichnet, dass** es sich bei der Komponente C) um Glasfasern handelt.

9. Verwendung gemäß Ansprüche 5, **dadurch gekennzeichnet, dass** die weiteren Additive und Hilfsstoffe D) in Mengen von 0,1 bis 70 Gew.-% eingesetzt werden.

## Claims

1. Use of monoesters of succinic acid as molecular-weight-reducing additive for improving flowability during the production of polyamide moulding compositions.

2. Use according to Claim 1, **characterized in that** the monoesters of succinic acid used comprise those with mono- or polyhydric alcohols.

3. Use according to Claim 1 or 2, **characterized in that** the monoesters of succinic acid used comprise monoethyl succinate, monopropyl succinate, ethylene glycol disuccinate, propylene glycol disuccinate, butylene glycol disuccinate, glycerol trisuccinate, pentaerythritol tetrasuccinate, dipentaerythritol hexasuccinate and tripentaerythritol octasuccinate.

4. Use according to Claims 1 to 3, **characterized in that** the polyamide moulding compositions also comprise
C) fillers and/or reinforcing materials which are preferably minerals, synthetic fibres, glass fibres, whiskers or carbon fibres.

5. Use according to Claims 1 to 4, **characterized in that** the polyamide moulding compositions also comprise D) further additives and auxiliaries, preferably flame retardants, elastomer modifiers, colorants, lubricants and mould-release agents and nucleating agents.

6. Use according to Claims 1 to 5, **characterized in that** the amounts used of the monoesters of succinic acid are from 0.1 to 2% by weight, based on component A), polyamide.

7. Use according to Claim 4, **characterized in that** the amounts used of component C) are from 5 to 70% by weight, based on the total amount of polyamide moulding composition.

8. Use according to Claims 4 and 7, **characterized in that** component C) involves glass fibres.

9. Use according to Claim 5, **characterized in that** the amounts used of the further additives and auxiliaries D) are from 0.1 to 70% by weight.

## Revendications

1. Utilisation de monoesters de l'acide succinique comme additif dégradant le poids moléculaire pour améliorer l'aptitude à l'écoulement lors de la préparation de masses de moulage de polyamide.

2. Utilisation selon la revendication 1, **caractérisée en ce qu'**on utilise comme monoesters de l'acide succinique ceux avec des alcools monovalents ou polyvalents.

3. Utilisation selon les revendications 1 ou 2, **caractérisée en ce qu'**on utilise comme monoesters de l'acide succinique l'ester monoéthylique de l'acide succinique, l'ester monopropylique de l'acide succinique, le disuccinate d'éthylèneglycol, le disuccinate de propylèneglycol, le disuccinate de butylèneglycol, le trisuccinate de glycérol, le tétrasuacinate de pentaérythritol, l'hexasuccinate de dipentaérythritol et l'octasuccinate de tripentaérythritol.

4. Utilisation selon les revendications 1 à 3, **caractérisée en ce que** les masses de moulage de polyamide contiennent en outre encore c) des charges et/ou des subrtances de renforcement, de préférence des minéraux, des fibres synthétiques, des fibres de verre, des trichites ou des fibres de carbone.

5. Utilisation selon les revendications 1 à 4, **caractérisée en ce que** les masses de moulage de polyamide contiennent en outre encore D) d'autres additifs et adjuvants, de préférence des agents ignifuges, des modificateurs élastomères, des colorants, des lubrifiants et des agents de démoulage et des agents de nucléation.

6. Utilisation selon les revendications 1 à 5, **caractérisée en ce que** les monoesters de l'acide succinique sont utilisés en des quantités de 0,1 à 2% en poids, par rapport au composant A) polyamide.

7. Utilisation selon la revendication 4, **caractérisée en ce que** le composant C) est utilisé en des quantités de 5 à 70% en poids, par rapport à la quantité totale de masse de moulage polyamide.

8. Utilisation selon les revendications 4 et 7, **caractérisée en ce qu'**il s'agit, pour le composant C), de fibres de verre.

9. Utilisation selon la revendication 5, **caractérisée en ce que** les autres additifs et adjuvants D) sont utilisés en des quantités de 0,1 70% en poids.
